# EUROPÄISCHE PATENTSCHRIFT

(11) **EP 3 354 517 B1**
(45) Veröffentlichungstag und Bekanntmachung des Hinweises auf die Patenterteilung: **17.03.2021**
(21) Anmeldenummer: 17207547.5
(22) Anmeldetag: 15.12.2017
(51) Int. Cl.: B60Q 1/26, B60R 1/12, F21S 43/20, F21S 43/237, F21S 43/239, F21S 43/243, F21S 43/245, F21S 43/249, F21S 43/247, F21S 43/31, F21S 43/40

(54) **AUSSENSPIEGEL MIT SEITENBLINKLEUCHTE MIT ZWEI LEUCHTBEREICHEN**
EXTERNAL MIRROR WITH TURNING INDICATOR LIGHT WITH TWO LIGHTING AREAS
MIROIR EXTÉRIEUR DOTÉ DE CLIGNOTANTS LATÉRAUX À DEUX ZONES LUMINEUSES

(30) Priorität: 27.01.2017 DE 102017201338
(43) Veröffentlichungstag der Anmeldung: 01.08.2018
(73) Patentinhaber: Magna Mirrors Holding GmbH, 63877 Sailauf (DE)
(72) Erfinder: KORULTAY, Erkan, 63768 Hösbach (DE); KENNEDY, Mark, 63743 Aschaffenburg (DE)
(74) Vertreter: Völger, Silke Beatrix

(56) Entgegenhaltungen:
- EP-A1- 2 965 947
- EP-A2- 1 391 755
- EP-A2- 2 489 550
- EP-A2- 2 524 841
- EP-A2- 2 743 131
- WO-A1-2009/110476
- DE-A1-102004 054 732
- DE-A1-102011 014 923
- US-A1- 2013 128 601

## Beschreibung

Die Erfindung betrifft einen Außenspiegel mit einer Seitenblinkleuchte gemäß dem Anspruch 1.

### Stand der Technik

Außenspiegel mit Seitenblinkleuchten sind beispielsweise aus den Dokumenten EP 0 941 892 A2, EP 1 698 515 A2 und EP 0 858 932 A2 bekannt. Für diese sogenannten Seitenblinkleuchten ist gesetzlich vorgeschrieben, dass das Licht entgegen der Fahrtrichtung in einem Winkelbereich von 5 bis 60° ausgestrahlt wird. Zur besseren Erkennbarkeit der Leuchtfunktion derartiger Leuchteneinheiten wird zusätzlich eine Lichtabstrahlung in Fahrtrichtung gewünscht.

Derartige Seitenblinkleuchten, die zwei Leuchtbereiche aufweisen, wobei der eine Leuchtbereich ein Leuchtmittel und einen Lichtleiter umfasst und wobei das in den Lichtleiter eingekoppelte Licht entgegen der Fahrtrichtung ausgestrahlt wird, und wobei der anderer Leuchtbereich einen Lichtleiter umfasst und das in den Lichtleiter eingekoppelte Licht in Fahrtrichtung abgestrahlt wird, sind aus der EP 2 489 550 A2 und der EP 1 391 755 A2 bekannt.

Das Dokument EP 2 524 841 A2 offenbart einen Außenrückspiegel mit einer Leuchteneinheit, wobei diese Lichtleitkörper und zugeordnete Leuchtmittel umfassen. Das Licht der Leuchtmittel wird in die Lichtleitkörper eingestrahlt und im weiteren Strahlengang auf einer Reflektorfläche derart reflektiert, dass es anschließend durch eine Lichtscheibe nach außen abgestrahlt wird.

Aus der DE 10 2004 054 732 A1 ist eine Lichtleiteranordnung für eine Fahrzeugleuchte mit einem plattenförmigen Lichtleiter und einem lang gestreckten Lichtleitstab bekannt. Das Licht eines Leuchtmittels wird in den plattenförmigen Lichtleiter so eingekoppelt, dass es sich im plattenförmigen Lichtleitkörper ausbreitet und mittels Umlenkstrukturen so umgelenkt wird, dass es durch die vorderen Hauptflächen austritt.

Dies wird beispielsweise durch die aus dem Dokument EP 0 941 892 A2 bekannte Anordnung von Leuchtdioden, sog. LED's, als Leuchtmittel erzielt, die im Spiegelgehäuse angeordnet sind und Licht in den geforderten Winkelbereichen und Richtungen ausstrahlen. Des Weiteren ist es aus dem Dokument DE 20 2005 014 267 U1 bekannt bei einer Seitenblinkleuchte LED's als Leuchtmittel einzusetzen, die das Licht in Lichtleiter einkoppeln. Die verwendeten Lichtleiter sind dabei als stabförmige Elemente ausgebildet, und derart angeordnet und ausgestaltet, dass das eingekoppelte Licht zu einer großflächigen Lichtaustrittsfläche geführt wird. Diese Lichtaustrittsfläche erstreckt sich häufig bandförmig von einer dem Kraftfahrzeug zugewandten Stelle des Spiegelgehäuses zu einer außen liegenden dem Kraftfahrzeug abgewandten Stelle im Spiegelgehäuse.

Bei den bekannten Seitenblinkleuchten SBL sind die Lichtleiter häufig von außerhalb des Spiegels sichtbar. In eingeschaltetem Zustand wird Licht in die Lichtleiter eingekoppelt und wird durch Prismen oder eine Struktur (z.B. Narbung) - die auch Auskoppelstruktur genannt wird - auf dem Lichtleiter nach außen abgelenkt. Optional werden auch LEDs mit oder ohne Reflektor eingesetzt, um Licht nach außen zu strahlen.

Nachteilig bei den bekannten Seitenblinkleuchten ist es häufig, dass die Prismen der Lichtleiter als einzelne Auskoppelstellen im beleuchteten Zustand zu erkennen sind.

Aus lichttechnischem Grunde und um eine bessere Homogenität zu erreichen, müssen die Ausrichtung und Form der Auskoppelstellen entlang des Lichtleiters angepasst werden. Ohne eine derartige Anpassung entsteht mehr Helligkeit in der Nähe der Lichtquellen.

In Außenspiegelanwendungen sind, wie obenstehend bereits erörtert, die Lichtleiter der Seitenblinkleuchten meistens gekrümmt ausgeführt. Die gekrümmte Ausführung der Lichtleiter erfordert ebenfalls eine Ausrichtung und Anpassung der Auskoppelstellen, um Licht nach außen abzulenken. Die unterschiedliche Ausrichtung der Auskoppelstellen führt ebenfalls zu einer Inhomogenität von verschiedenen Blickwinkeln. Lichtleitern mit Struktur und Krümmung haben auch eine Inhomogenität, wenn man die Seitenblinkleuchte von verschiedenen Blickwinkeln betrachtet.

Auch die Ausführung von Seitenblinkleuchten mit sichtbaren einzelnen LEDs generieren Licht-Hotspots und vermitteln eine Inhomogenität im beleuchteten Zustand.

Es ist daher eine Aufgabe der vorliegenden Erfindung eine Seitenblinkleuchte für einen Außenspiegel derart weiterzubilden, dass diese sowohl im beleuchteten als auch im unbeleuchteten Zustand ein sehr homogenes Erscheinungsbild aufweist.

Diese Aufgabe wird durch die in Anspruch 1 angegebenen Merkmale gelöst. Durch den erfindungsgemäßen Außenspiegel wird eine Seitenblinkleuchte geschaffen, die eine Anzahl unsichtbare Lichtleiter für die Beleuchtung eines Reflektors oder eine Lichtkammer über die gesamte Länge der Seitenblinkleuchte hinweg ausbildet. Diese Beleuchtung wirkt homogen von verschiedene Blickwinkel da keine Auskoppelstellen oder Struktur sichtbar sind. Die Erfüllung der gesetzlichen Anforderungen der Seitenblinkleuchte wird durch andere LEDs und/oder Lichtleiter sichergestellt.

Die Funktionalitäten für die gesetzlichen Anforderungen werden von der Funktionalität der Erzeugung eines homogenen Lichtbandes, welches Licht im Wesentlichen in Fahrtrichtung abstrahlt, getrennt, so dass ein höheres Maß an Designfreiheit entsteht.

Um eine noch bessere Homogenität des abgestrahlten Lichtes in Fahrtrichtung zu erreichen, wird in einer Weiterbildung des Erfindungsgedankens eine zusätzliche diffuse Folie im Strahlengang eingesetzt.

Das eingezeichnete Koordinatensystem bezieht sich auf ein Kraftfahrzeug, wobei die z-Richtung die Hochachse, die y-Richtung die Querachse und die x-Richtung die Längsachse oder Fahrtrichtung bezeichnet

Vorteilhafte Ausgestaltungen der vorliegenden Erfindung sind in den Unteransprüchen angegeben.

Die Erfindung wird nachfolgend anhand der in den Zeichnungen abgebildeten Ausführungsform näher beschrieben.

Es zeigt:

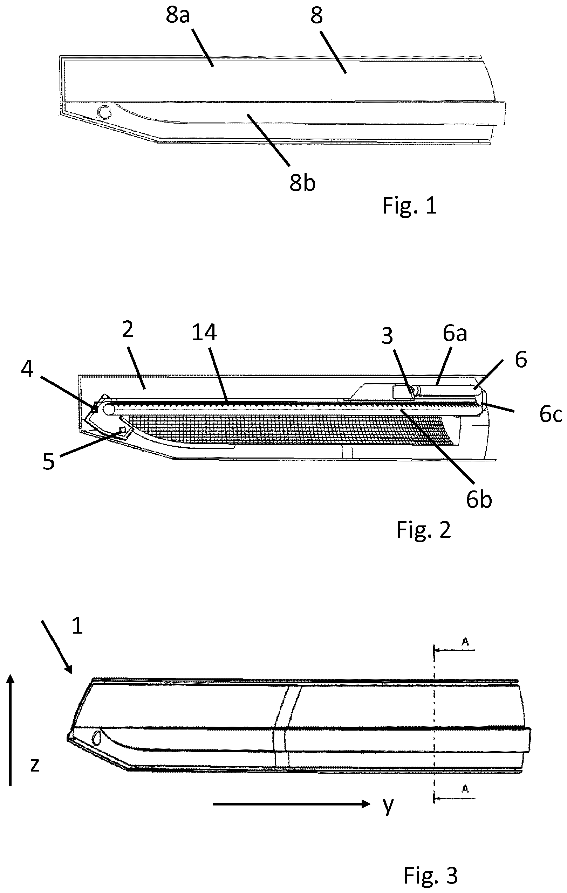

Fig. 1 eine Ansicht auf eine Lichtscheibe einer Seitenblinkleuchte,
Fig. 2 eine Ansicht auf die Seitenblinkleuchte ohne Lichtscheibe,
Fig. 3 eine Ansicht auf die Seitenblinkleuchte gemäß der Figuren 1 und 2 im zusammengebauten Zustand,
Fig. 4 einen Ausschnitt durch einen Querschnitt einer Seitenblinkleuchte mit schematisch dargestelltem Strahlengang,
Fig. 5 einen Ausschnitt durch einen Querschnitt der Seitenblinkleuchte gemäß Figur 4,
Fig. 6 einen Ausschnitt durch einen Querschnitt einer Seitenblinkleuchte in einer weiteren Ausführungsform,
Fig. 7 eine schematische Darstellung der Seitenblinkleuchte mit Lichtleiter und Leuchtmittel; und
Fig. 8 einen Querschnitt durch die Seitenblinkleuchte längs des Schnitts A-A in Figur 7.

Ein Außenspiegel umfasst üblicherweise einen Spiegelfuß, eine Verstärkerplatte als Teil eines Spiegelkopfes sowie eine zwischen Spiegelfuß und Verstärkerplatte ausgebildete Gelenkverbindung. Der Spiegelfuß dient dabei zur Anbindung des Außenspiegels an der Fahrzeugkarosserie an der Fahrer- bzw. Beifahreraußenseite des Kraftfahrzeugs. Die Verstärkerplatte wird im montierten Zustand des Außenspiegels von einer Gehäusehalbschale des Spiegelkopfes umgeben und hält die Glasbaugruppe bzw. das Spiegelglas.

Auf der dem Spiegelglas abgewandten Seite der Gehäusehalbschale ist eine Seitenblinkleuchte 1 in einer Aufnahmeöffnung der Gehäusehalbschale integriert. Die Seitenblinkleuchte 1 erstreckt sich dabei über annähernd die gesamte Breite (y-Richtung) des Spiegelkopfes bzw. Gehäusehalbschale ausgehend von einer dem Fahrzeug zugewandten Seite des Spiegelkopfes bis zu einer äußeren dem Fahrzeug abgewandten Seite des Spiegelkopfes.

Die Seitenblinkleuchte 1 weist einen ersten Leuchtbereich auf, der mindestens ein Leuchtmittel sowie Bauteile zur Herstellung eines diffusen Lichts aufweist, sowie einen zweiten Leuchtbereich, der mindestens ein Leuchtmittel sowie Bauteile zur Ausleuchtung des zweiten Leuchtbereichs für gesetzliche Anforderungen aufweist.

Die Seitenblinkleuchte 1 umfasst im Wesentlichen ein Gehäuseelement 2, Leuchtmittel 3, 4, 5, Platinen mit elektrischen Anschlüssen, erste und zweite Lichtleiter 6, 7 sowie eine Lichtscheibe 8.

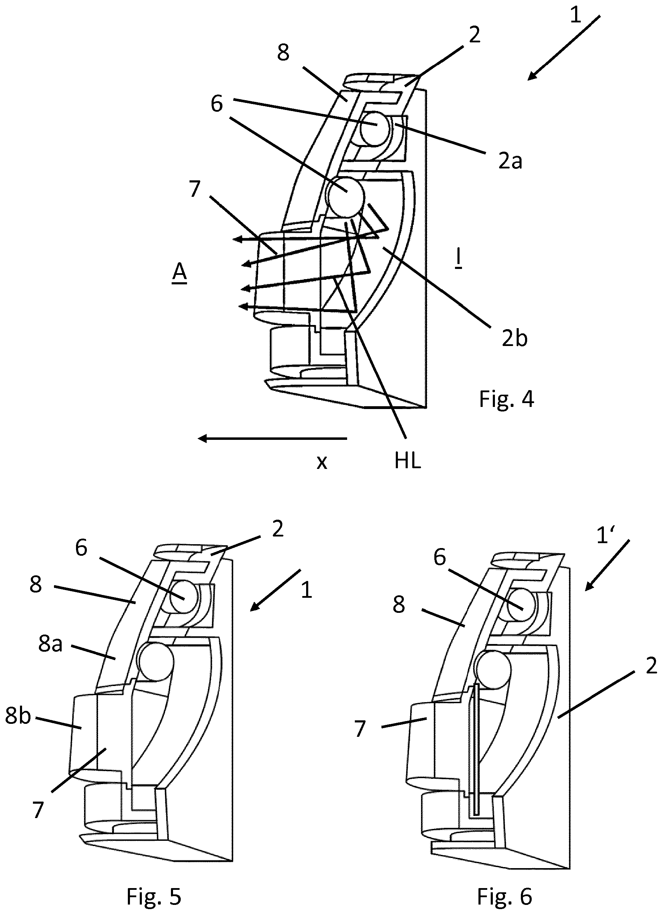

Aus der Darstellung der Figuren 4 - 6 kann man ersehen, dass das Gehäuseelement 2 der Seitenblinkleuchte 1 im Innenraum I des Spiegelkopfes bzw. der Gehäusehalbschale angeordnet ist und mittels der Lichtscheibe 8 abgedeckt in der Gehäusehalbschale integriert angeordnet ist. Die Außenseite der Seitenblinkleuchte ist in den Figuren mit A bezeichnet. Das Gehäuseelement 2 ist im Wesentlichen als schalenförmig gebogenes Element ausgebildet, welches an der Gehäusehalbschale fixiert ist. Des Weiteren sind in dem Gehäuseelement 2 erste und zweite muldenförmige Vertiefungen 2a, 2b vorgesehen. Zumindest die muldenförmigen Vertiefungen 2a, 2b sind als Reflektor ausgeführt. Hierzu sind die Oberflächen mit einer reflektierenden Beschichtung, vorzugsweise einer Chromschicht versehen. Die Beschichtung ist beispielsweise aufgedampft. Des Weiteren ist das Gehäuseelement 2 im Bereich des Reflektors mit einer Lichtumlenkstruktur ausgeführt. Alternativ kann das Gehäuseelement auch aus einem weißen Hochglanz Kunststoff hergestellt sein

Die Lichtscheibe 8 ist vorzugsweise aus einem thermoplastischen Kunststoff, beispielsweise PMMA ausgeführt und umfasst einen undurchsichtigen bandförmigen Bereich 8a und einen transparenten bandförmigen Bereich 8b auf. Der transparente bandförmige Bereich bildet das Lichtfenster, durch das die Lichtstrahlen des ersten Leuchtbereichs in Fahrtrichtung nach außen geleitet werden können.

Der zweite Leuchtbereich wird durch ein Leuchtmittel 5, vorzugsweise eine LED und ein Lichtleiter 7 erzeugt. Die LED 5 strahlt ihr Licht in einen Einkoppelabschnitt 10 des zugeordneten Lichtleiters 7 ein. Der Einkoppelabschnitt 10 ist vorliegend an einem ersten Endbereich des Lichtleitkörpers 7 ausgebildet. Der Lichtleitkörper 7 ist länglich ausgebildet und weist eine hauptsächliche Erstreckung in y-Richtung auf, die durch den Pfeil L angezeigt ist. Gegenüberliegend zu dem Einkoppelabschnitt 10 ist an dem Lichtleiter 7 ein Auskoppelabschnitt 11 ausgebildet.

Der in den Lichtleitkörper 7 eingekoppelte Lichtstrahl wird durch eine Totalreflexion durch den gesamten Lichtleiter 7 in Längsrichtung geleitet und entgegen der Fahrtrichtung an dem Auskoppelabschnitt 11 ausgestrahlt. Der Auskoppelabschnitt 11 befindet sich vorliegend am dem zum Einkoppelabschnitt 10 gegenüber liegenden Endbereich. Der Lichtleiter 7 ist derart angeordnet, dass die dem zweiten Leuchtbereich zugeordneten Lichtstrahlen entgegen der Fahrtrichtung in einem Winkelbereich von 5 bis 60° ausgestrahlt werden. Nähere Einzelheiten zu dem Lichtleiter 7 werden hier nicht ausgeführt, da Lichtleiter in einer Vielzahl von Ausführungsformen bekannt sind. In den Zeichnungen ist erkennbar, dass der Lichtleiter 7 einen rechteckigen Querschnitt aufweist.

Der erste Leuchtbereich wird durch zwei Leuchtmittel 3, 4, vorzugsweise LEDs und einen Lichtleiter 6 erzeugt. Die LEDs 3, 4 strahlen ihr Licht jeweils in einen Einkoppelabschnitt 12, 13 des zugeordneten Lichtleiters 6 ein. Die Einkoppelabschnitte 12 und 13 sind vorliegend an einem ersten und zweiten Endbereich des Lichtleitkörpers 6 ausgebildet. Der Lichtleitkörper 6 ist zweifach um 90 Grad abgewinkelt ausgeführt und weist einen oberen kurzen Abschnitt 6a, einen unteren Abschnitt 6b auf, der eine hauptsächliche Erstreckung in y-Richtung aufweist und sich annähernd über die gesamte Länge der Gehäusehalbschale 2 erstreckt. Die Abschnitte 6a und 6b sind über einen in z-Richtung verlaufenden Abschnitt 6c verbunden.

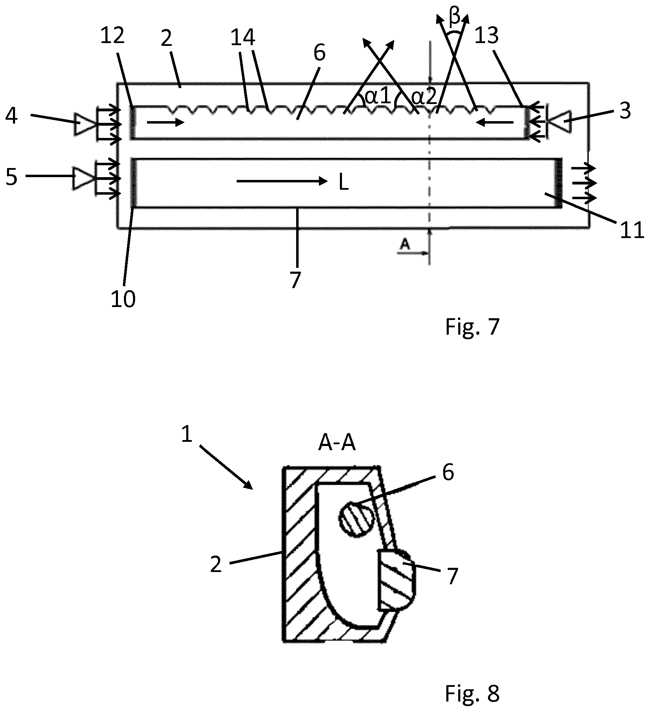

Wie obenstehend bereits erläutert, wird Licht ausgehend von zwei LEDs 3, 4, die an gegenüberliegenden Endbereichen des Lichtleiters 6 angeordnet sind, in den Lichtleiter 6 eingekoppelt und werden zumindest teilweise durch Totalreflexion an den glatten Außenflächen des Lichtleiters geleitet. Eine Abstrahlung aus dem länglichen Lichtleiters heraus in Richtung auf das Gehäuseelement 2 bzw. die muldenförmige Vertiefungen 2b wird über Auskoppelstrukturen 14 erreicht, die auf einer Außenfläche des Lichtleiters 6 im Abschnitt 6b angeordnet sind. Die dort auftreffenden Lichtstrahlen werden an der Auskoppelstruktur 14 in Richtung auf die muldenförmige Vertiefung 2b reflektiert. Der Strahlengang ist in der Figur 4 durch die Pfeile HL und in der schematischen Darstellung der Figur 7 eingezeichnet. Aus der Figur 7 kann man erkennen, dass die Lichtstrahlen der LED 4 unter einem Winkel von Alpha α1 durch die Auskoppelstruktur 14 aus dem Lichtleiter 6 reflektiert und die Lichtstrahlen der LED 3 unter einem Winkel Alpha α2 an der Auskoppelstruktur 14 aus dem Lichtleiter 6 reflektiert werden. Hierdurch kreuzen sich die ausgekoppelten Lichtstrahlen unter einem Winkel Beta β, was zu einer besonders homogenen Lichtauskopplung führt. Die muldenförmige Vertiefungen 2b ist als Reflektor ausgebildet, so dass die dort auftreffenden Lichtstrahlen durch den Lichtleitkörper 7, der den transparenten Abschnitt 8b der Lichtscheibe 8 bildet, in Fahrtrichtung F nach außen abgestrahlt werden. Wie es weiterhin aus den Figuren 4, 5, 6, 8 ersichtlich ist, ist der Lichtleiter 6 mit seinen Abschnitten 6a, 6b, 6c verdeckt hinter dem undurchsichtigen bandförmigen Bereich 8a der Lichtscheibe 8 angeordnet.

In einer alternativen Ausgestaltung kann der erste Leuchtbereich auch nur mit einem Leuchtmittel ausgeführt sein. Hierbei werden Lichtstrahlen eines Leuchtmittels nur in einen Einkoppelabschnitt des Lichtleiters eingekoppelt.

In der Figur 6 ist in einer Schnittdarstellung eine weitere Ausführungsform einer Seitenblinkleuchte 1' dargestellt. Bei dieser Variante wird im Unterschied zu der zuvor beschriebenen Ausführungsform der Seitenblinkleuchte 1 eine zusätzliche diffuse Folie im Strahlengang eingesetzt.

Die Seitenblinkleuchte 1, 1' ist vorzugsweise derart in die Ausnehmung der Gehäusehalbschale eingefügt, dass sich über den Rand der Ausnehmung hinweg eine glatt zusammenhängende Oberfläche ergibt. Diese Einbausituation ist bekannt und zeichnerisch nicht dargestellt.

## Patentansprüche

1. Außenspiegel mit einer Seitenblinkleuchte (1) mit einem ersten Leuchtbereich zur Herstellung eines diffusen Lichts und einem zweiten Leuchtbereich zur Erfüllung der gesetzlichen Anforderungen, wobei die Seitenblinkleuchte (1) ein Gehäuseelement (2), eine Anzahl Leuchtmittel (3, 4, 5), erste und zweite Lichtleiter (6,7) sowie eine Lichtscheibe (8) umfasst, wobei die Lichtscheibe (8) einen transparenten Bereich (8b) umfasst, und wobei der erste Leuchtbereich, durch zumindest ein Leuchtmittel (4),vorzugsweise eine LEDs und einen ersten Lichtleiter (6), der eine längliche Erstreckung hat, und der einen Einkoppelabschnitt (12) und einen Auskoppelabschnitt aufweist, und die Lichtscheibe (8) erzeugt wird, wobei der Einkoppelabschnitt (12) an einem Endbereich des Lichtleiters (6) ausgebildet ist und der Auskoppelabschnitt Auskoppelstrukturen (14) umfasst, die auf einer in seiner Längserstreckung liegenden Außenfläche des Lichtleiters (6) ausgebildet sind, und wobei der zweite Leuchtbereich durch ein Leuchtmittel (5), vorzugsweise eine LED und einen zweiten Lichtleiter (7), der einen Einkoppelabschnitt (10) und einen Auskoppelabschnitt (11) aufweist, und der eine längliche Erstreckung hat, erzeugt wird, wobei das Leuchtmittel (5) derart angeordnet ist, dass das von dem Leuchtmittel (5) ausgestrahlte Licht in den Einkoppelabschnitt (10) eingekoppelt, durch den gesamten Lichtleiter (7) in Längsrichtung geleitet und entgegen der Fahrtrichtung in einem Winkelbereich 5 bis 60 Grad an dem Auskoppelabschnitt (11) ausgestrahlt wird, **dadurch gekennzeichnet, dass** der erste Leuchtbereich weiterhin einen Reflektor umfasst, und wobei die Auskoppelstrukturen (14) derart ausgebildet sind, dass das über den Einkoppelabschnitt (12) in den Lichtleiter eingekoppelte Licht an der Auskoppelstruktur (14) in Richtung auf den in dem Gehäuseelement angeordneten Reflektor geleitet wird, und wobei die Lichtscheibe (8) im Strahlengang derart angeordnet ist, dass die vom dem Reflektor reflektierten Lichtstrahlen durch die Lichtscheibe (8) in Fahrtrichtung nach außen geleitet werden, und dass die Lichtscheibe (8) einen nicht transparenten Bereich (8a) umfasst, und dass der transparente Bereich (8b) durch den zweiten Lichtleiter (7) gebildet wird und wobei der erste Lichtleiter (6) in dem Gehäuseelement (2) hinter dem nicht transparenten Bereich (8a) angeordnet ist.

2. Außenspiegel nach Anspruch 1, **dadurch gekennzeichnet, dass** der Auskoppelabschnitt (11) sich am dem zum Einkoppelabschnitt (10) gegenüber liegenden Endbereich befindet.

3. Außenspiegel nach Anspruch 1, **dadurch gekennzeichnet, dass** der erste Leuchtbereich ein zweites Leuchtmittel (3) umfasst und der erste Lichtleiter (6)
ein dem zweiten Leuchtmittel (3) zugeordneten zweiten Einkoppelabschnitt (13) aufweist, wobei die beiden Einkoppelabschnitte (12, 13) an einem ersten und zweiten Endbereich des ersten Lichtleiters (6) ausgebildet sind.

4. Außenspiegel nach Anspruch 3, **dadurch gekennzeichnet, dass** der erste Lichtleiter (6) zweifach um 90 Grad abgewinkelt ausgeführt ist und einen oberen kurzen Abschnitt (6a), einen unteren Abschnitt (6b), der eine hauptsächliche Erstreckung entlang der Erstreckung des Lichtleitkörpers (7) aufweist, hat, wobei sich der erste Lichtleiter (6) annähernd über die gesamte Länge des Gehäuseelements (2) (2) erstreckt.

5. Außenspiegel nach einem der vorangehenden Ansprüche, **dadurch gekennzeichnet, dass** der Reflektor durch eine muldenförmige Vertiefung (2b) des Gehäuseelementes (2) gebildet wird, wobei die muldenförmige Vertiefung mit einer reflektierenden Beschichtung und vorzugsweise mit Lichtumlenkstrukturen ausgeführt ist.

6. Außenspiegel nach einem der vorangehenden Ansprüche, **dadurch gekennzeichnet, dass** der erste Leuchtbereich weiterhin eine diffuse Folie umfasst, die im Strahlengang angeordnet ist.

## Claims

1. External mirror with a turning indicator light (1) with a first lighting area for generating diffuse light and a second lighting area for meeting statutory requirements, wherein the turning indicator light (1) comprises a housing element (2), a number of light-emitting means (3, 4, 5), first and second light guides (6, 7) and a lens (8), wherein the lens (8) comprises a transparent area (8b), and wherein the first lighting area is produced by at least one light-emitting means (4), preferably an LED and a first light guide (6), which has an elongate extent and has a coupling-in section (12) and a coupling-out section, and the lens (8), wherein the coupling-in section (12) is formed at an end area of the light guide (6) and the coupling-out section comprises coupling-out structures (14) that are formed on an outer surface of the light guide (6) located in the longitudinal extent of the former, and wherein the second lighting area is produced by a light-emitting means (5), preferably an LED and a second light guide (7), which has a coupling-in section (10) and a coupling-out section (11) and has an elongate extent, wherein the light-emitting means (5) is arranged such that the light emitted by the light-emitting means (5) is coupled into the coupling-in section (10), guided through the entire light guide (7) in the longitudinal direction and output at the coupling-out section (11) counter to the driving direction in an angular range of 5 to 60 degrees, **characterized in that** the first lighting area furthermore comprises a reflector, and wherein the coupling-out structures (14) are embodied such that the light coupled into the light guide via the coupling-in section (12) is guided at the coupling-out structure (14) in the direction of the reflector arranged in the housing element, and wherein the lens (8) is arranged in the beam path such that the light beams reflected by the reflector are guided through the lens (8) to the outside in the driving direction, and **in that** the lens (8) comprises a non-transparent area (8a), and **in that** the transparent area (8b) is formed by the second light guide (7) and wherein the first light guide (6) is arranged in the housing element (2) downstream of the non-transparent area (8a).

2. External mirror according to Claim 1, **characterized in that** the coupling-out section (11) is located at the end area located opposite the coupling-in section (10).

3. External mirror according to Claim 1, **characterized in that** the first lighting area comprises a second light-emitting means (3) and the first light guide (6) has a second coupling-in section (13) assigned to the second light-emitting means (3), wherein the two coupling-in sections (12, 13) are formed at a first and second end area of the first light guide (6).

4. External mirror according to Claim 3, **characterized in that** the first light guide (6) is embodied such that it is angled twice by 90 degrees and has an upper short section (6a), a lower section (6b) having a main extent along the extent of the lightguide body (7), wherein the first light guide (6) extends approximately over the entire length of the housing element (2).

5. External mirror according to one of the preceding claims, **characterized in that** the reflector is formed by a well-type depression (2b) of the housing element (2), wherein the well-type depression is provided with a reflective coating and preferably with light deflecting structures.

6. External mirror according to one of the preceding claims, **characterized in that** the first lighting area furthermore comprises a diffuse film arranged in the beam path.

## Revendications

1. Miroir extérieur doté d'un clignotant latéral (1) ayant une première zone lumineuse permettant de créer une lumière diffuse et une deuxième zone lumineuse permettant de répondre aux exigences légales, dans lequel le clignotant latéral (1) comprend un élément de boîtier (2), un nombre de moyens d'éclairage (3, 4, 5), un premier et un deuxième guide de lumière (6, 7), ainsi qu'un diffuseur (8), le diffuseur (8) comprenant une zone transparente (8b), et dans lequel la première zone lumineuse est générée par au moins un moyen d'éclairage (4), de préférence une LED, et un premier guide de lumière (6) ayant une extension longitudinale et qui présente une partie d'injection (12) et une partie de déclenchement, et par le diffuseur (8), dans lequel la partie d'injection (12) est réalisée au niveau d'une zone d'extrémité du guide de lumière (6) et la partie de déclenchement comprend des structures de déclenchement (14) qui sont réalisées sur une surface extérieure du guide de lumière (6), située dans son extension longitudinale, et dans lequel la deuxième zone lumineuse est générée par un moyen d'éclairage (5), de préférence une LED, et un deuxième guide de lumière (7) qui présente une partie d'injection (10) et une partie de déclenchement (11), et qui présente une extension longitudinale, le moyen d'éclairage (5) étant disposé de telle sorte que la lumière émise par le moyen d'éclairage (5) est injectée dans la partie d'injection (10), est guidée à travers l'ensemble du guide de lumière (7) dans la direction longitudinale et est émise à l'encontre du sens de la marche dans une plage angulaire de 5 à 60 degrés au niveau de la partie de déclenchement (11), **caractérisé en ce que** la première zone lumineuse comprend en outre un réflecteur, et dans lequel les structures de déclenchement (14) sont réalisées de telle sorte que la lumière injectée dans le guide de lumière par la partie d'injection (12) est guidée au niveau de la structure de déclenchement (14) en direction du réflecteur disposé dans l'élément de boîtier, et dans lequel le diffuseur (8) est disposé sur la trajectoire de faisceau de telle sorte que les rayons lumineux réfléchis par le réflecteur sont guidés par le diffuseur (8) dans le sens de la marche vers l'extérieur, et que le diffuseur (8) comprend une zone non transparente (8a), et que la zone transparente (8b) est formée par le deuxième guide de lumière (7), et dans lequel le premier guide de lumière (6) est disposé dans l'élément de boîtier (2) derrière la zone non transparente (8a).

2. Miroir extérieur selon la revendication 1, **caractérisé en ce que** la partie de déclenchement (11) se trouve dans la zone d'extrémité située à l'opposé de la partie d'injection (10).

3. Miroir extérieur selon la revendication 1, **caractérisé en ce que** la première zone lumineuse comprend un deuxième moyen d'éclairage (3) et le premier guide de lumière (6) présente une deuxième partie d'injection (13) associée au deuxième moyen d'éclairage (3), les deux parties d'injection (12, 13) étant réalisées sur une première et une deuxième zone d'extrémité du premier guide de lumière (6).

4. Miroir extérieur selon la revendication 3, **caractérisé en ce que** le premier guide de lumière (6) est réalisé de manière doublement coudée de 90 degrés et présente une partie courte supérieure (6a), une partie inférieure (6b) qui présente une extension principale le long de l'extension du corps de guide de lumière (7), le premier guide de lumière (6) s'étendant approximativement sur toute la longueur de l'élément de boîtier (2).

5. Miroir extérieur selon l'une quelconque des revendications précédentes, **caractérisé en ce que** le réflecteur est formé par un creux en forme de cuvette (2b) de l'élément de boîtier (2), le creux en forme de cuvette étant réalisé avec un revêtement réfléchissant et de préférence avec des structures de déviation de lumière.

6. Miroir extérieur selon l'une quelconque des revendications précédentes, **caractérisé en ce que** la première zone lumineuse comprend en outre un film diffus qui est disposé sur la trajectoire de faisceau.
